(19) Europäisches Patentamt
European Patent Office
Office européen des brevets

(11) EP 1 389 829 A1

(12) **EUROPEAN PATENT APPLICATION**

(43) Date of publication:
**18.02.2004 Bulletin 2004/08**

(51) Int Cl.[7]: **H02M 7/538**, H02M 7/5387, H02M 7/539, H02J 3/04

(21) Application number: **03018031.9**

(22) Date of filing: **07.08.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **08.08.2002 JP 2002231804**
**08.05.2003 JP 2003130540**

(71) Applicant: **CANON KABUSHIKI KAISHA**
**Ohta-ku, Tokyo (JP)**

(72) Inventors:
- **Kondo, Hiroshi**
  **Ohta-ku, Tokyo (JP)**
- **Takehara, Nobuyoshi**
  **Ohta-ku, Tokyo (JP)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(54) **Power converter and electric power generator**

(57) A power converter is installed for each solar cell, and electric power having a low voltage and a relatively large electric current is input to the power converter, thereby reducing as much as possible the wiring work which greatly raises the cost of an electric power generator. For this purpose, a power converter which has a high operating efficiency and by which a low-cost electric power generator can be constructed when an unstable power source such as a solar cell is used is desired. As this power converter, a DC/DC converter is provided which supplies DC power supplied from the solar cell to a transformer by switching the DC power, thereby boosting the output voltage from the solar cell by a few tens of times to a few hundred times. The number of turns of the primary winding of the transformer is set to 2 or 3.

**F I G. 4**

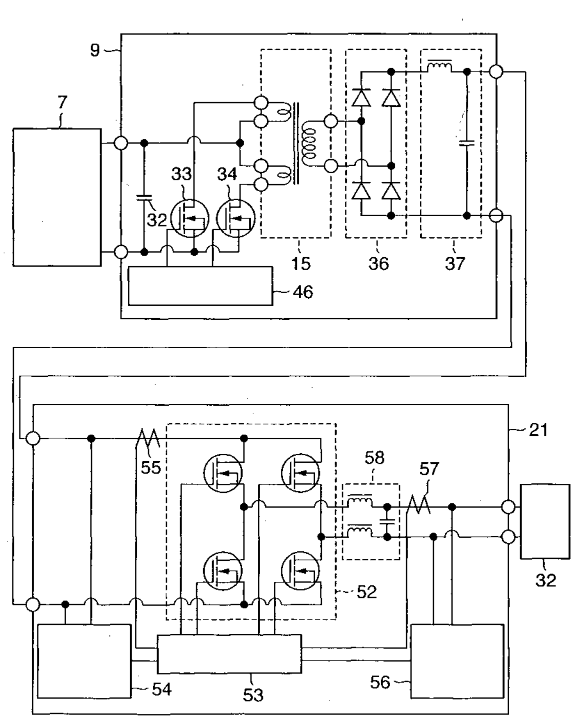


EP 1 389 829 A1

## Description

FIELD OF THE INVENTION

The present invention relates to a power converter and electric power generator, and more particularly, to power conversion using an unstable power source as a power supply.

BACKGROUND OF THE INVENTION

Many power sources having unstable outputs are known. Typical examples of the unstable power sources are a fuel cell which greatly varies its power depending on temperatures, a solar cell which largely varies its power depending on solar radiation, and a wind power generator which largely varies its power depending on wind power.

The outputs of these power sources are unstable, so the generated powers cannot be directly used. Therefore, as a means for compensating for the power when the outputs from these power sources are low, a method of interconnecting these power sources to a commercial power system (to be referred to as a "system" hereinafter) is used. For example, to interconnect a photovoltaic power generator to the 100-V system, solar cells are connected in series in order to obtain a necessary voltage (about 140 V), and the series-connected solar cells are connected to a system interconnection inverter.

To use an unstable power source, a means for compensating for the power when the output is low is essential as described above. This undesirably increases the cost of an electric power generator. To reduce the cost, series connection of unstable power sources is particularly a problem.

This problem is serious for a solar cell or fuel cell having a lower power supply voltage. The output voltage of a solar cell is about 0.5 to 1.8 V. To interconnect such solar cells to the 100-V system, at least several ten solar cells must be connected in series. To apply this arrangement to a large-scale photovoltaic power generator, a plurality of series structures in each of which solar cells are connected in series must be connected in parallel. The wiring work requires much labor, and this greatly raises the cost of the photovoltaic power generator.

To reduce the cost of an electric power generator, the present inventors have proposed an electric power generator in which a power converter is installed for each unstable power source, and electric power having a low voltage and a relatively large electric current is input to this power converter, thereby minimizing the amount of wiring work which greatly raises the cost. However, a power converter which has a high operation efficiency and by which a low-cost electric power generator can be constructed when an unstable power source is used is still unknown.

SUMMARY OF THE INVENTION

The present invention has been made to individually or collectively solve the above problems, and has as its object to provide a power converter optimum for a power source having an unstable output voltage.

To achieve the above object, a preferred aspect of the present invention discloses a power converter for converting an output from a power source having an unstable output voltage, comprising:

a transformer, wherein a primary winding has two or three turns; and
a converter, arranged to supply DC power supplied from the power source to the transformer by switching the DC power, thereby boosting the output voltage from the power source by a few ten times to a few hundred times.

Other features and advantages of the present invention will be apparent from the following description taken in conjunction with the accompanying drawings, in which like reference characters designate the same or similar parts throughout the figures thereof.

BRIEF DESCRIPTION OF THE DRAWINGS

Fig. 1 is a view showing an outline of a photovoltaic power generating system using cell converters;
Fig. 2 is a block diagram showing the arrangement of the cell converter;
Fig. 3 is a view showing the external appearance of the cell converter;
Fig. 4 is a view showing the arrangements of a DC/DC converter and inverter;
Fig. 5 is a graph showing the I-V characteristics of a solar cell when the temperature of the solar cell is used as a parameter;
Fig. 6 is a graph in which the relationship between the power conversion efficiency of the DC/DC converter and the input voltage in Example 1 is plotted for each input power;
Fig. 7 is a graph in which the relationship between the power conversion efficiency of the DC/DC converter and the input voltage in Example 2 is plotted for each input power;
Fig. 8 is a graph in which the relationship between the power conversion efficiency of the DC/DC converter and the input voltage in Comparative Example 1 is plotted for each input power;
Fig. 9 is a graph showing the transition of the outside temperature and irradiation;
Fig. 10 is a graph showing the optimum operating point voltage of the solar cell;
Fig. 11 is a graph showing the integrated power of each cell converter for every 30 min;

Fig. 12 is a graph showing the integrated power of each cell converter for one day;

Fig. 13 is a graph in which the relationship between the power conversion efficiency of the DC/DC converter and the input voltage in Example 3 is plotted for each input power;

Fig. 14 is a graph in which the relationship between the power conversion efficiency of the DC/DC converter and the input voltage in Example 4 is plotted for each input voltage;

Fig. 15 is a graph in which the relationship between the power conversion efficiency of the DC/DC converter and the input voltage in Comparative Example 2 is plotted for each input voltage;

Fig. 16 is a graph showing the transition of the outside temperature and irradiation;

Fig. 17 is a graph showing the optimum operating point voltage of the solar cell;

Fig. 18 is a graph showing the integrated power of each cell converter for every 30 min;

Fig. 19 is a graph showing the integrated power of each cell converter for one day; and

Figs. 20 to 25 are tables showing the specifications of transformers used in Example 1, Example 2, Comparative Example 1, Example 3, Example 4, and Comparative Example 2.

## DETAILED DESCRIPTION OF THE PREFERRED EMBODIMENTS

An electric power generator of an embodiment according to the present invention will now be described in detail in accordance with the accompanying drawings.

An electric power generator using a solar cell as an unstable power source will be explained as a representative example. However, an unstable power source is not limited to a solar cell but can be any power source such as a fuel cell or wind power generator which largely varies its power in accordance with the environmental condition such as the temperature, humidity, solar radiation, or wind power.

Also, this electric power generator will be referred to as a "cell converter" hereinafter because the electric power generator is a combination of a solar cell and power converter.

[Outline]

The present inventors examined a power converter optimum for a cell converter.

First, since an input to a power converter is a low voltage, a transformer having a high transformation ratio must be used. To obtain a high power conversion efficiency and realize a small size and low cost, the number of turns of the primary winding of a transformer is preferably small. Accordingly, the present inventors first thought that one turn was ideal. This is so because if the primary winding has one turn, the number of turns of the secondary winding can be minimized, and this minimizes the power loss (copper loss) produced by the resistance components of the primary and secondary windings.

After that, the present inventors found that there is a close relationship between the number of turns of the primary winding of a transformer, the input voltage, and the conversion efficiency. In particular, the present inventors found that since the output voltage of an unstable power source largely changes, the integrated power of the output from a power converter is not highest when the primary winding has one turn.

[Arrangement]

Fig. 1 is a view showing an outline of a photovoltaic power generating system using cell converters.

In this photovoltaic power generating system shown in Fig. 1, the output AC power from cell converters 1 can be supplied as a reverse power flow to a system 51 via outlets 55. The system 51 is connected to a distribution board 53 via a buying/selling power meter 52. The buying/selling power meter 52 includes a buying power meter for integrating electric power supplied from the system 51 to a load 54, and a selling power meter for integrating electric power which reversely flows from the photovoltaic power generating system to the system 51. The distribution board 53 is connected to a plurality of outlets such as an outlet 55 which supplies electric power to the load 54, and outlets 55 to which AC power is input from the cell converters 1.

● Cell Converter

Fig. 2 is a block diagram showing the arrangement of the cell converter 1. Fig. 3 is a view showing the external appearance of the cell converter 1.

The cell converter 1 is made up of a solar cell 7, and a DC/DC converter 9 and inverter 21 arranged on a non-light-receiving surface (rear surface) of the solar cell 7. The output power (DC power) from the solar cell 7 is converted into an AC power of 100 V, and this AC power is output via a plug 32 corresponding to the outlet 55.

● Solar Cell

As the solar cell 7 used in the cell converter 1, a solar cell such as an amorphous silicon-based, polysilicon-based, or single crystal silicon-based solar cell can be used. A voltage of 0.8 to 1.8 V favorable as an input voltage to the cell converter 1 can be obtained by connecting solar cells in series. However, this voltage of 0.8 to 1.8 V can be easily obtained by using a stacked solar cell. The use of a stacked solar cell is favorable because series connection of solar cells is unnecessary. As the stacked solar cell, a tandem cell structure or triple cell structure is well known.

The power capacity of the solar cell 7 is preferably as follows.

The conversion efficiency of the solar cell is about 10%. If the size of the solar cell 7 is increased, the distance between the solar cell and a power converter increases. Accordingly, the resistance of the line increases, and this increases the loss. The output voltage of the solar cell 7 is originally low. Therefore, if the size of the solar cell 7 is increased, an electric current increases, and this abruptly increases the loss on the line between the solar cell 7 and a power converter. In other words, even if the line between the solar cell 7 and a power converter is made short and thick as much as possible, the capacity (size) of the solar cell 7 cannot be unlimitedly increased in order to decrease the loss on this line.

On the other hand, when a power converter is to be attached to the solar cell 7, this power converter must be placed as close as possible to the solar cell 7 in order to decrease the loss on the line. If the capacity (size) of the solar cell 7 is decreased, the power converter becomes difficult to place. In addition, the number of the cell converters 1 required to obtain the necessary power increases. This raises the cost of the photovoltaic power generating system.

Accordingly, the power capacity of the solar cell 7 is naturally 5 to 40 W in accordance with the relationship between the loss and the cost.

● DC/DC Converter & Inverter

The DC/DC converter 9 boosts the output voltage from the solar cell 7 and supplies this voltage to the inverter 21. The DC/DC converter 9 is required to have a high efficiency and low loss in order to effectively use a relatively low generated power of the solar cell 7.

Fig. 4 is a view showing the arrangements of the DC/DC converter 9 and inverter 21.

A gate driving circuit 46 of the DC/DC converter 9 supplies two gate driving signals having opposite phases to switching elements 33 and 34 forming a push-pull switching circuit. The duty of each gate driving signal (rectangular wave) is fixed. This duty of the gate driving signal is preferably 50% which is the maximum duty of the push-pull switching circuit, since the conversion efficiency is high. The duty of the gate driving signal is fixed in order to simplify the arrangement, decrease the cost, and improve the reliability of the gate driving circuit 46. Note that the switching frequency is set between 20 kHz to a few hundred kHz in accordance with tradeoff between the switching loss and downsizing of the transformer.

As described above, the cell converter 1 has a low input voltage and a large input current which compensates for the low input voltage. Therefore, the ratio of the loss when the primary side is conducted is very large in the total loss of the DC/DC converter 9. Assuming that the input voltage and output voltage of the DC/DC converter 9 are equal, an electric current flowing through an ON switching element is doubled if the on-duty is halved. Accordingly, when the switching elements 33 and 34 are driven by decreasing the on-duty, the loss on the primary side was increased as indicated by

$$L = Is^2 \cdot R \cdot D \qquad (1)$$

where L is the loss on the primary side

Is is an electric current flowing through the switching element

R is the resistance

D is the on-duty

For example, if the on-duty is halved (D/2), an electric current flowing through the switching element is doubled (2·Is), so the loss when the primary side is conducted is doubled as indicated by

$$L = (2 \cdot Is)^2 \cdot R \cdot D/2 = 4Is^2 \cdot R \cdot D/2 = 2 \cdot Is^2 \cdot R \cdot D$$

That is, in the DC/DC converter 9, the loss on the primary side can be minimized by fixing the duty of the gate driving signal to 50% of the maximum value (or less than 50% of the maximum value in order to prevent a period during which both the switching elements 33 and 34 are turned on by a switching element delay). Note that the voltage on the secondary side of the DC/DC converter 9 is sufficiently high (about 140 V when the cell converter is interconnected to the 100-V system), and the electric current on this secondary side is much smaller than that on the primary side (e.g., about 1/140 that on the primary side). Therefore, the ratio of the generated loss is smaller than that on the primary side.

Also, since the output voltage of the solar cell 7 is low, MOSFETs having a low ON resistance are preferably used as the switching elements 33 and 34. At present, a MOSFET as a unipolar device is particularly excellent in ON resistance.

In order that the power supply of the DC/DC converter 9 be regarded as a voltage source, an input capacitor 32 is preferably an OS-CON (manufactured by Sanyo Electric) having a low equivalent series resistance (ESR) and a good high frequency characteristic. It is also possible to use a monolithic ceramic capacitor or tantalum electrolytic capacitor having a low ESR. By this input capacitor 32, the power supply of the DC/DC converter 9 can be regarded as a voltage source, so the DC/DC converter 9 functions as a so-called voltage source type converter.

The transformation ratio (winding ratio) of a transformer 15 is so set that a DC voltage (e.g., 140 V or more) necessary for the inverter 21 to output an AC voltage of 100 V is supplied to the inverter 21 when the operating voltage of the solar cell 7 is a minimum. Note that when the switching circuit of the DC/DC converter 9 is operated at a maximum duty of 50%, the output voltage of the DC/DC converter 9 is obtained by multiplying the input voltage by the transformation ratio of the transformer 15.

The minimum voltage of the output destination is 48 V of a communication DC power source, the maximum voltage is 380 V calculated by taking account of voltage variations in an AC output of 200 V, and the preferred range of the solar cell as an input source is 0.8 to 1.8 V. Accordingly, the transformation ratio of the transformer 15 of this embodiment is about 25 to 500 times.

The larger the number of turns of the transformer 15, the higher the power conversion efficiency when the output from the solar cell 7 is low, and the lower the power conversion efficiency when the output from the solar cell 7 is high. The present inventors found that the number of turns of the primary winding of the transformer 15 is preferably 2 or 3 in order to improve the integrated value (to be referred to as an "integrated conversion efficiency" hereinafter) of the conversion efficiency of a power converter connected to an unstable power source whose output voltage largely varies in accordance with temperature changes or solar radiation variations.

When the number of turns of the primary winding is 2 or 3, the length of the primary winding is disadvantageously two to three times that when the number of turns is 1. In addition, since the winding region is predetermined, the winding sectional area allocated per turn reduces to 1/2 to 1/3. As a consequence, the resistance value of the primary winding increases by approximately four to nine times. However, since the flux density of the core of the transformer decreases to 1/2 to 1/3, the iron loss of the transformer can be reduced. Also, the loss on the primary side of the DC/DC converter 9 as a whole includes the ON resistance loss of the switching elements 33 and 34 and the wiring loss, in addition to the iron loss of the transformer 15 and the copper loss of the primary winding described above. Therefore, even when the resistance value of the primary winding of the transformer 15 increases by four times, the loss of the DC/DC converter 9 as a whole does not increase by four times. Note that the number of turns means the number of linkages of a "core" as a path of a magnetic flux and a "wire" as a path of an electric current.

[Operation of Cell Converter]

In the arrangements shown in Fig. 4, DC power is input from the solar cell 7 to the DC/DC converter 9. The input DC power is smoothed by the input capacitor 32, and boosted by a boosting circuit including the gate driving circuit 46, switching elements 33 and 34, and transformer 15. The output power from the secondary winding of the transformer 15 is rectified by a diode bridge 36, smoothed by a smoothing circuit 37, and supplied to the inverter 21.

Since the duty of the switching circuit of the DC/DC converter 9 is fixed, the ratio of the input voltage to the output voltage is always constant. Accordingly, the output voltage of the DC/DC converter 9 is represented by

$$Vd = Tr \times Vop \qquad (2)$$

where Vd is the output voltage of the DC/DC converter 9

Vop is the operating point voltage of the solar cell 7

Tr is the boosting ratio

and varies if the operating point voltage of the solar cell 7 varies.

A control circuit 53 of the inverter 21 monitors the input voltage and current from the DC/DC converter 9 by using an input voltage detector 54 and input current detector 55, respectively, and controls the switching operation of the inverter bridge 52 by pulse width modulation (PWM). By this PWM, the output voltage and current from the DC/DC converter 9 are controlled. Consequently, the operating point voltage and electric current of the solar cell 7 can be controlled. In other words, the control circuit 53 allows effective use of the generated power of the solar cell 7 by controlling tracking of the maximum power of the DC/DC converter 9 and solar cell 7.

The input DC power to the inverter 21 is converted into AC power by the inverter bridge 52 and a filter 58 including interconnection reactors, and supplied to the plug 32.

A number of methods are known as a method of monitoring the input voltage and current to the inverter 21 and controlling the inverter bridge 52 by PWM. An example will be described below.

The control circuit 53 which is a one-chip microprocessor or the like generates a switching control signal to be supplied to the inverter bridge 52 made up of four bridge-connected switching elements as follows.

That is, the control circuit 53 detects the input voltage and input current by the input voltage detector 54 and input current detector 55, respectively, and sets a command value of the optimum operating point voltage of the solar cell 7. The control circuit 53 then compares the command value of the optimum operating point voltage with the input voltage, and generates an input error signal.

Also, the control circuit 53 detects the voltage of a fundamental frequency component of a connecting point by using an AC voltage detector 56 having a bandpass filter. Then, the control circuit 53 multiplies the input error signal by a signal indicating the detected voltage of the fundamental frequency component, thereby generating a current command value signal indicative of a control target value. In addition, the control circuit 53 performs an arithmetic operation by using the current command value signal and a signal indicating an alternate current detected by an output current detector 57, thereby generating a current error signal.

A gate control circuit as part of the control circuit 53 compares this current error signal with a reference triangular wave signal of about several tens of kHz, and generates a PWM switching signal. The gate control circuit supplies this PWM switching signal to each switching element of the inverter bridge 52.

By the maximum power tracking control and feedback control as described above, the inverter 21 extracts the maximum power from the solar cell 7 and DC/DC converter 9, and at the same time outputs AC power having the same current phase as the system 51 and a power factor of 1.

Typical examples according to the present invention will be described below, and the effects of these examples will be verified in accordance with the results of comparison with comparative examples.

Examples

In each example explained below, the form of a photovoltaic power generating system is the same as Fig. 1, and the arrangement of a cell converter is the same as Fig. 4.

[Example 1]

In Example 1, a thin film solar cell in which an amorphous layer and microcrystal layer were stacked was used as the solar cell 7. The structure and manufacturing method of the stacked solar cell and the method of attaching a collector electrode are irrelevant to the substance of the present invention, so a detailed description thereof will be omitted. However, these structure and methods are disclosed in, e.g., Japanese Patent Laid-Open Nos. 11-243219 and 8-139439.

The single cell performance of the solar cell 7 was an output of 1.0 V at 15.0 A under rated solar radiation (spectral AM 1.5, 100 mW/cm$^2$, cell temperature 55°C). A power generator was obtained by attaching the DC/DC converter 9 to each solar cell 7.

● Transformer

If the minimum operating voltage of the solar cell 7 is fixed to 0.8 V, the boosting ratio when the 100-V system 51 is the destination of connection can be 0.8 : 140 = 1 : 175. However, the transformation ratio (the number of turns of primary winding : the number of turns of secondary winding) of the transformer 15 was set to 1 : 200 to leave a certain margin. Also, the switching frequency of the DC/DC converter 9 was set at 40 kHz, and the duty of the DC/DC converter 9 was fixed to 50%.

The DC/DC converter 9 has a push-pull circuit. Therefore, letting P1 and P2 be the numbers of turns of the two primary windings of the transformer 15, and S1 be the number of turns of the secondary winding, the winding ratio P1 P2 : S1 is 1 : 1 : 200. The specifications of the transformer 15 used in Example 1 are shown in Fig. 20.

● Output Characteristics

The output voltage from the solar cell 7 changes momentarily in accordance with the environment such as the ambient temperature or solar radiation. Accordingly, the input voltage to the DC/DC converter 9 which inputs the generated power of the solar cell 7 also largely changes in accordance with the environment.

Fig. 5 is a graph showing the I-V characteristics of a solar cell when the temperature of the solar cell is used as a parameter. The operating voltage of a solar cell often rises when the temperature lowers, although it also depends upon the type of solar cell. The operating voltage of course changes in accordance with the irradiation.

Fig. 6 is a graph in which the relationship between the power conversion efficiency of the DC/DC converter 9 and the input voltage in Example 1 is plotted for each input power. The characteristics are separately plotted for low solar radiation (the input power was 1 to 8 W) and high solar radiation (the input power was 9 to 15 W), so that the curves indicating these characteristics do not overlap. The power conversion efficiency η is indicated by

$$\eta\ [\%] = (Vo \cdot Io / Vi \cdot Ii) \times 100 \qquad (3)$$

where Vo is the output voltage of the DC/DC converter 9
Io is the output current of the DC/DC converter 9
Vi is the input voltage of the DC/DC converter 9
Ii is the input current of the DC/DC converter 9

The input voltage changed in accordance with environmental changes. However, as shown in Fig. 6, a high conversion efficiency (80 to 95%) was stably obtained within the range of about 0.8 to 1.2 V.

[Example 2]

In Example 2, the number of turns of the primary winding of the transformer 15 used in the DC/DC converter 9 was 3. The specifications of the transformer 15 used in Example 2 are shown in Fig. 21.

Similar to Fig. 6, Fig. 7 is a graph in which the relationship between the power conversion efficiency of the DC/DC converter 9 and the input voltage in Example 2 is plotted for each input power.

Compared to Example 1, the DC/DC converter 9 of Example 2 had a high conversion efficiency under low solar radiation (the input power was 1 to 8 W), and decreased the conversion efficiency under high solar radiation (the input power was 9 to 15 W).

[Comparative Example 1]

To demonstrate the effectiveness of Examples 1 and 2, a DC/DC converter 9 incorporating a transformer 15 in which the number of turns of the primary winding was 1 was formed as Comparative Example 1. The specifications of the transformer 15 used in Comparative Example 1 are shown in Fig. 22.

Similar to Figs. 6 and 7, Fig. 8 is a graph in which the relationship between the power conversion efficiency of the DC/DC converter 9 and the input voltage in Comparative Example 1 is plotted for each input power.

Compared to Examples 1 and 2, the DC/DC converter 9 of Comparative Example 1 had a high conversion efficiency for the rated input (1 V, 15 W), but had a low conversion efficiency especially when the input voltage was high. Accordingly, the conversion efficiency presumably lowers in the morning and evening during which the temperature of the solar cell 7 is low and solar radiation is weak, or in the wintertime during which the temperature is low.

[Comparative Test]

Figs. 9 to 12 are graphs showing the results of comparison of the integrated powers of the cell converters 1 of Examples 1 and 2 and Comparative Example 1 in a certain day. Fig. 9 shows the transition of the outside temperature and irradiation. Fig. 10 shows the optimum operating point voltage of the solar cell 7 (in other words, the transition of the input voltage to the DC/DC converter 9). Fig. 11 shows the integrated power of each cell converter 1 for every 30 min. Fig. 12 shows the integrated power of each cell converter 1 for a day.

As shown in Fig. 11, Examples 1 and 2 in which the numbers of turns of the primary windings were 2 and 3, respectively, had excellent output characteristics under low solar radiation when compared to Comparative Example 1 in which the number of turns of the primary winding was 1. In addition, although not clearly shown in Fig. 11, when the forenoon and afternoon under the same solar radiation conditions are compared, the output difference was larger in the forenoon during which the temperature of the cell converter 1 was low. This is so because, as shown in Figs. 6 to 8, the conversion efficiency of Comparative Example 1 was low when the temperature of the solar cell 7 was low and the output voltage of the solar cell 7 was high (the input voltage was high).

Fig. 12 shows the integrated power per day calculated by adding up the integrated powers for every 30 min shown in Fig. 11. As shown in Fig. 12, Examples 1 and 2 were inferior to Comparative Example 1 in the power generation amount for the daytime except for the morning and evening, but superior to Comparative Example 1 in the power generation amounts for the morning and evening. Consequently, the integrated power per day of each of Examples 1 and 2 was larger than that of Comparative Example 1. Although Figs. 9 to 12 show data obtained in fine weather, in cloudy weather the power generation amounts of Examples 1 and 2 were often larger than that of Comparative Example 1 throughout a day. Also, even in fine weather, the power generation amounts of Examples 1 and 2 were larger than that of Comparative Example 1 in the morning and evening and in the wintertime during which the temperature of the cell converter 1 was low. Accordingly, the power generation amounts per year of Examples 1 and 2 are presumably larger than that of Comparative Example 1.

Furthermore, the conversion efficiency characteristics shown in Figs. 6 and 7 are stabler than those shown in Fig. 8 with respect to changes in input voltage. Therefore, when the number of turns of the primary winding is set to 2 or 3, the effect of extending the range of the operating point voltage of the solar cell 7 can be expected.

[Example 3]

In Example 3, a solar cell in which three photoelectric conversion layers containing amorphous silicon were stacked was used as the solar cell 7. The manufacturing method of this solar cell is disclosed in Japanese Patent Laid-Open No. 6-21494 and the like.

The performance of the solar cell 7 was an output of 1.5 V at 30 W under rated solar radiation (spectral AM 1.5, 100 mW/$cm^2$, cell temperature 55°C). Note that the optimum operating point voltage of the solar cell changed between 1.2 and 1.8 V in accordance with changes in environment (solar radiation and temperature).

As in other examples, the DC/DC converter 9 had a push-pull circuit, the switching frequency of the DC/DC converter 9 was set at 40 kHz, and the duty of the DC/DC converter 9 was fixed to 50%. However, the transformation ratio of the transformer 15 used was changed because the voltage of the solar cell 7 was different from that in Example 1.

● Transformer

Since the minimum value of the optimum operating point voltage of the solar cell 7 is 1.2 V, the boosting ratio when the 100-V system 51 is the destination of connection is 1.2 : 140 = 1 : 117. However, the transformation ratio of the transformer 15 was set to 1 : 133 to leave a certain margin. The specifications of the transformer 15 used in Example 3 are shown in Fig. 23.

● Output Characteristics

Fig. 13 is a graph in which the relationship between the power conversion efficiency of the DC/DC converter 9 and the input voltage in Example 3 is plotted for each input power.

The input voltage changed in accordance with environmental changes. However, as shown in Fig. 13, a high conversion efficiency (90 to 95%) was stably obtained within the range of about 1.2 to 1.8 V.

[Example 4]

In Example 4, the same solar cell 7 as in Example 3 was used, and the number of turns of the primary winding of the transformer 15 used in the DC/DC converter 9 was changed to 3. The specifications of the transformer 15 used in Example 4 are shown in Fig. 24.

Fig. 14 is a graph in which the relationship between the power conversion efficiency of the DC/DC converter 9 and the input voltage in Example 4 is plotted for each input power.

Compared to Example 3, the DC/DC converter 9 of Example 4 generally had a high conversion efficiency under low solar radiation (the input power was 1 to 8 W), and decreased the conversion efficiency under high solar radiation (the input power was 9 to 15 W).

[Comparative Example 2]

To demonstrate the effectiveness of Examples 3 and 4, a DC/DC converter 9 incorporating a transformer 15 in which the number of turns of the primary winding was 1 was formed as Comparative Example 2. The specifications of the transformer 15 used in Comparative Example 2 are shown in Fig. 25.

Similar to Figs. 13 and 14, Fig. 15 is a graph in which the relationship between the power conversion efficiency of the DC/DC converter 9 and the input voltage in Comparative Example 2 is plotted for each input power.

Compared to Examples 3 and 4, the DC/DC converter 9 of Comparative Example 2 had a high conversion efficiency for the rated input (1.5 V, 30 W), but had a low conversion efficiency especially when the input voltage was high. Accordingly, the conversion efficiency presumably lowers in the morning and evening during which the temperature of the solar cell 7 is low and solar radiation is weak, or in the wintertime during which the temperature is low.

[Comparative Test]

Figs. 16 to 19 are graphs showing the results of comparison of the integrated powers of the cell converters 1 of Examples 3 and 4 and Comparative Example 2 in a certain day. Fig. 16 shows the transition of the outside temperature and irradiation. Fig. 17 shows the optimum operating point voltage of the solar cell 7 (in other words, the transition of the input voltage to the DC/DC converter 9). Fig. 18 shows the integrated power of each cell converter 1 for every 30 min. Fig. 19 shows the integrated power of each cell converter 1 for a day.

As shown in Fig. 18, Examples 3 and 4 in which the numbers of turns of the primary windings were 2 and 3, respectively, had excellent output characteristics under low solar radiation when compared to Comparative Example 2 in which the number of turns of the primary winding was 1. In addition, although not clearly shown in Fig. 18, when the forenoon and afternoon under the same solar radiation conditions are compared, the output difference was larger in the forenoon during which the temperature of the cell converter 1 was low. This is so because, as shown in Figs. 13 to 15, the conversion efficiency of Comparative Example 2 was low when the temperature of the solar cell 7 was low and the output voltage of the solar cell 7 was high (the input voltage was high).

Fig. 19 shows the integrated power per day calculated by adding up the integrated powers for every 30 min shown in Fig. 18. As shown in Fig. 19, Examples 3 and 4 were inferior to Comparative Example 2 in the power generation amount for the daytime except for the morning and evening, but superior to Comparative Example 2 in the power generation amounts for the morning and evening. Consequently, the integrated power per day of each of Examples 3 and 4 was larger than that of Comparative Example 2. Although Figs. 16 to 19 show data obtained in fine weather, in cloudy weather the power generation amounts of Examples 3 and 3 were often larger than that of Comparative Example 2 throughout a day. Also, even in fine weather, the power generation amounts of Examples 3 and 4 were larger than that of Comparative Example 2 in the morning and evening and in the wintertime during which the temperature of the cell converter 1 was low. Accordingly, the power generation amounts per year of Examples 3 and 4 are presumably larger than that of Comparative Example 2.

Furthermore, the conversion efficiency characteristics shown in Figs. 13 and 14 are stabler than those shown in Fig. 15 with respect to changes in input voltage. Therefore, when the number of turns of the primary winding is set to 2 or 3, the effect of extending the range of the operating point voltage of the solar cell 7 can be expected.

In this embodiment as has been described above, in a power converter which receives power from a power source having an unstable output voltage, the number of turns of the primary winding of a transformer for boosting the output DC power from the unstable power source is set to 2 or 3. This improves the integrated power per day of an electric power generator (in other words, the conversion efficiency per day). Especially in a cell converter using a solar cell as an unstable power source, the generated power of the solar cell can be effectively used.

As many apparently widely different embodiments of the present invention can be made without departing from the spirit and scope thereof, it is to be understood that the invention is not limited to the specific embodiments thereof except as defined in the appended claims.

A power converter is installed for each solar cell, and electric power having a low voltage and a relatively large electric current is input to the power converter, thereby reducing as much as possible the wiring work which greatly raises the cost of an electric power generator. For this purpose, a power converter which has a high operating efficiency and by which a low-cost electric power generator can be constructed when an unstable power source such as a solar cell is used is desired. As this power converter, a DC/DC converter is provided which supplies DC power supplied from the solar cell to a transformer by switching the DC power, thereby boosting the output voltage from the solar cell by a few tens of times to a few hundred times. The number of turns of the primary winding of the transformer is set to 2 or 3.

## Claims

**1.** A power converter for converting an output from a power source having an unstable output voltage, comprising:

a transformer, wherein a primary winding has two or three turns; and
a converter, arranged to supply DC power supplied from the power source to the transformer by switching the DC power, thereby boosting the output voltage from the power source by a few ten times to a few hundred times.

**2.** The converter according to claim 1, wherein the converter boosts the output voltage from the power source by 25 to 500 times.

**3.** The converter according to claim 1, wherein the power source is a solar cell.

**4.** The converter according to claim 1, wherein the power source is a single-cell solar cell.

**5.** The converter according to claim 1, wherein the converter performs switching at a fixed frequency and fixed duty.

**6.** The converter according to claim 1, further comprising an inverter arranged to convert the output DC power from the converter into AC power by a switching operation which holds the output voltage from the converter substantially constant.

**7.** An electric power generator comprising:

a power source having an unstable output voltage; and
a power converter cited in claim 1.

**8.** The generator according to claim 7, wherein the generator has the power converters in number corresponding to a rated output power of the generator.

**9.** The generator according to claim 7, further comprising an inverter arranged to convert the output DC power from the converter into AC power by a switching operation which holds the output voltage from the converter substantially constant, thereby generating an output of the generator.

**10.** The generator according to claim 7, wherein the generator is interconnected to a commercial power system.

**11.** The generator according to claim 7, wherein the power source is a solar cell.

**12.** The generator according to claim 7, wherein the power source is a single-cell solar cell.

FIG. 1

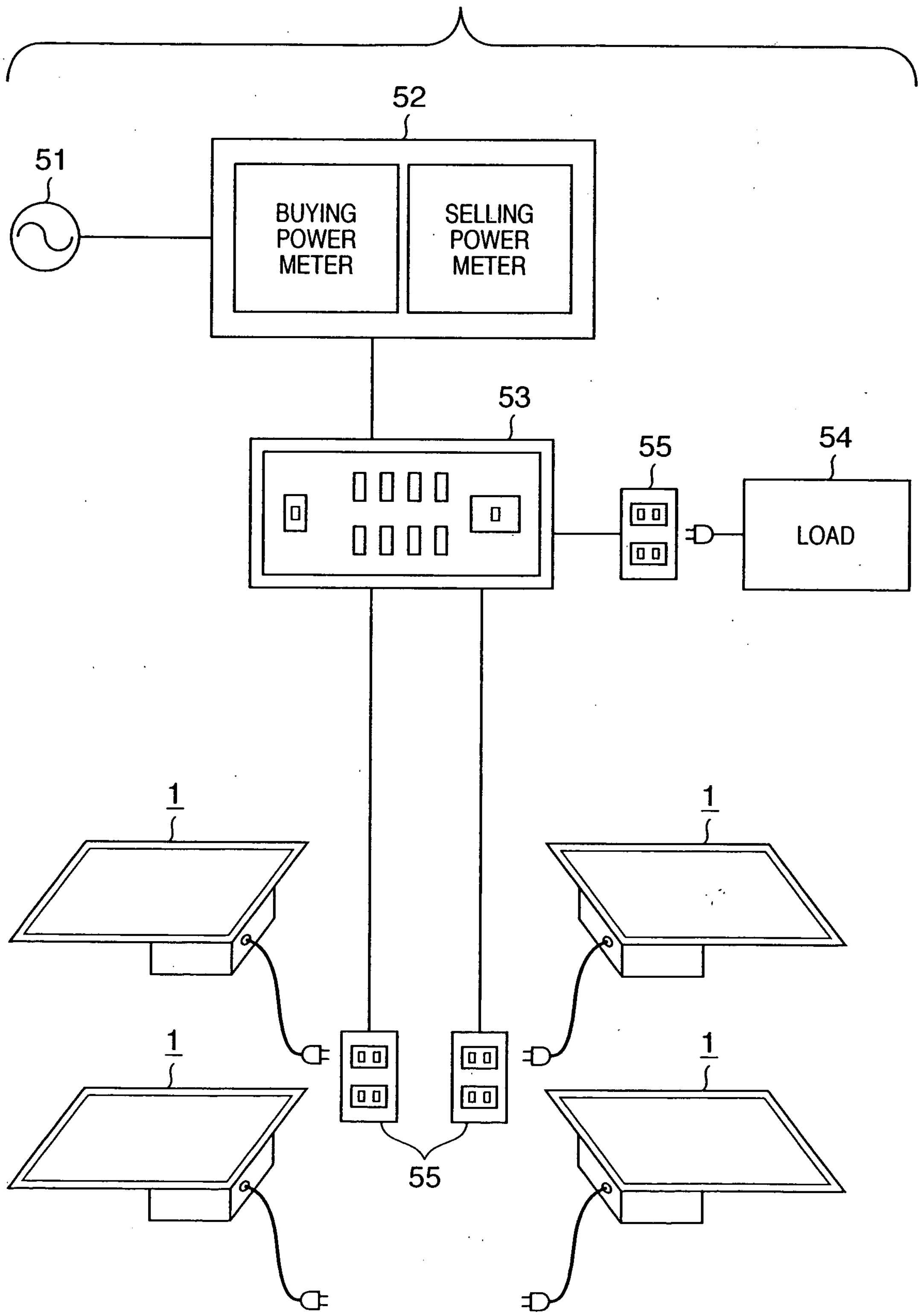
52
51
BUYING POWER METER
SELLING POWER METER
53
55
54
LOAD
1
1
1
1
55

FIG. 2

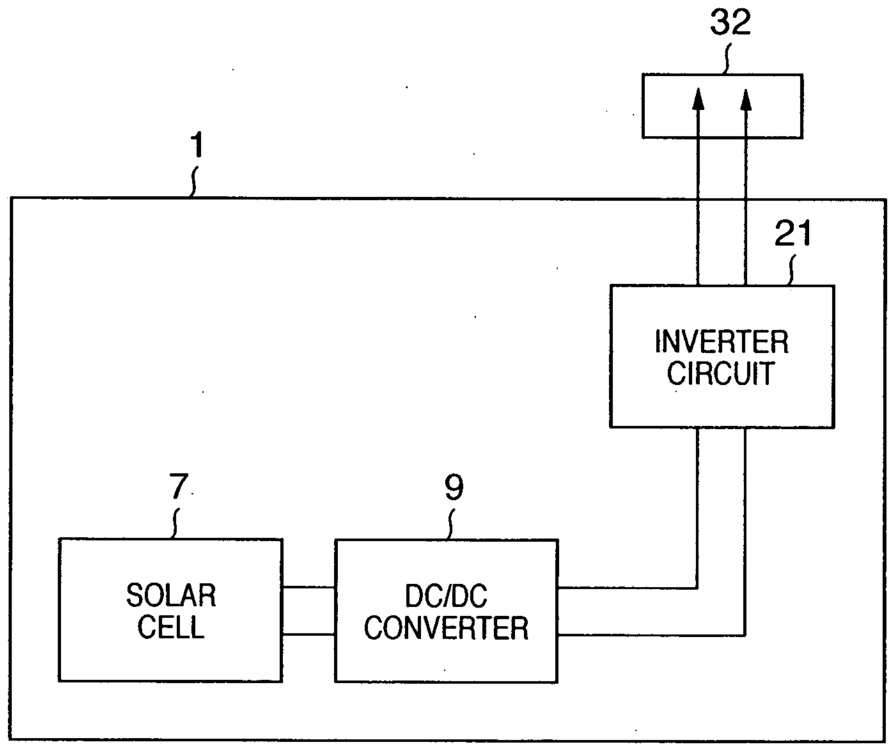

# FIG. 3

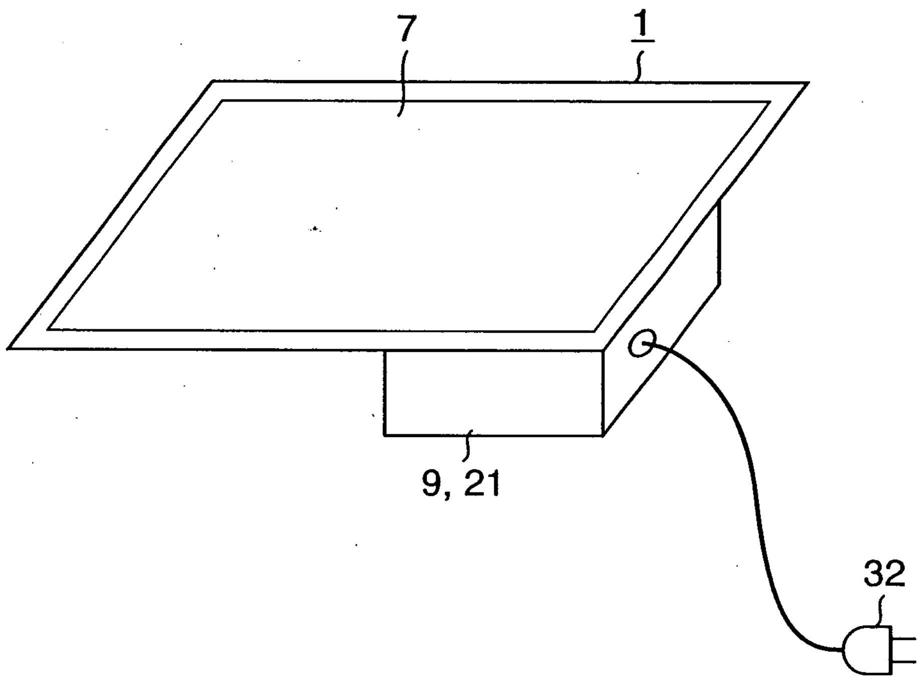

# FIG. 4

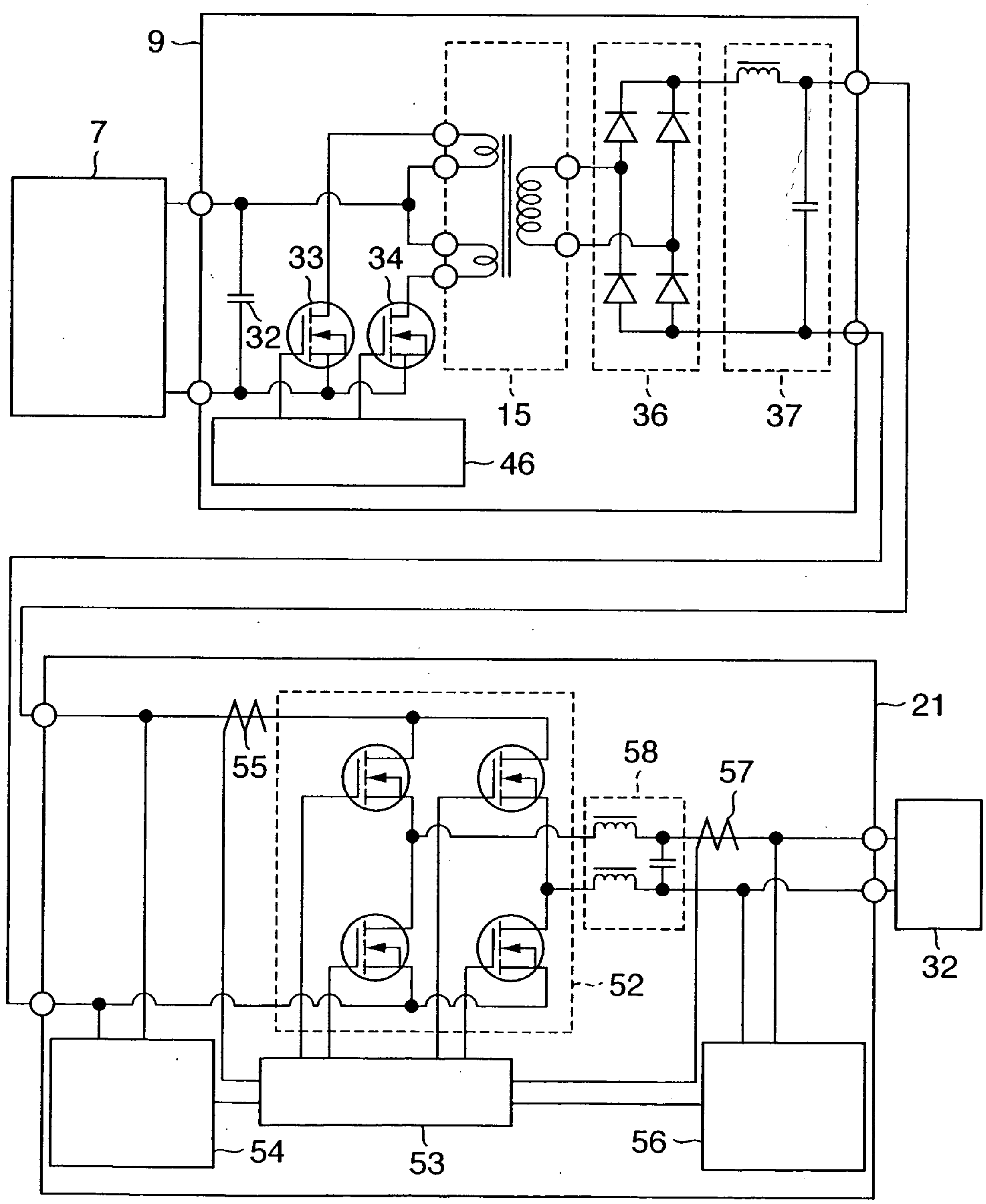

FIG. 5

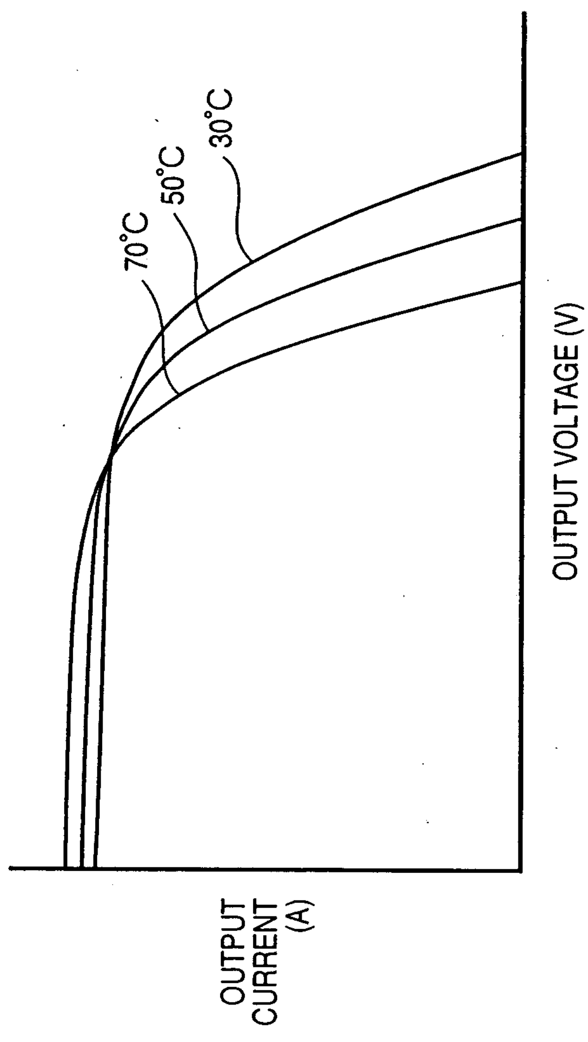

# F I G. 6

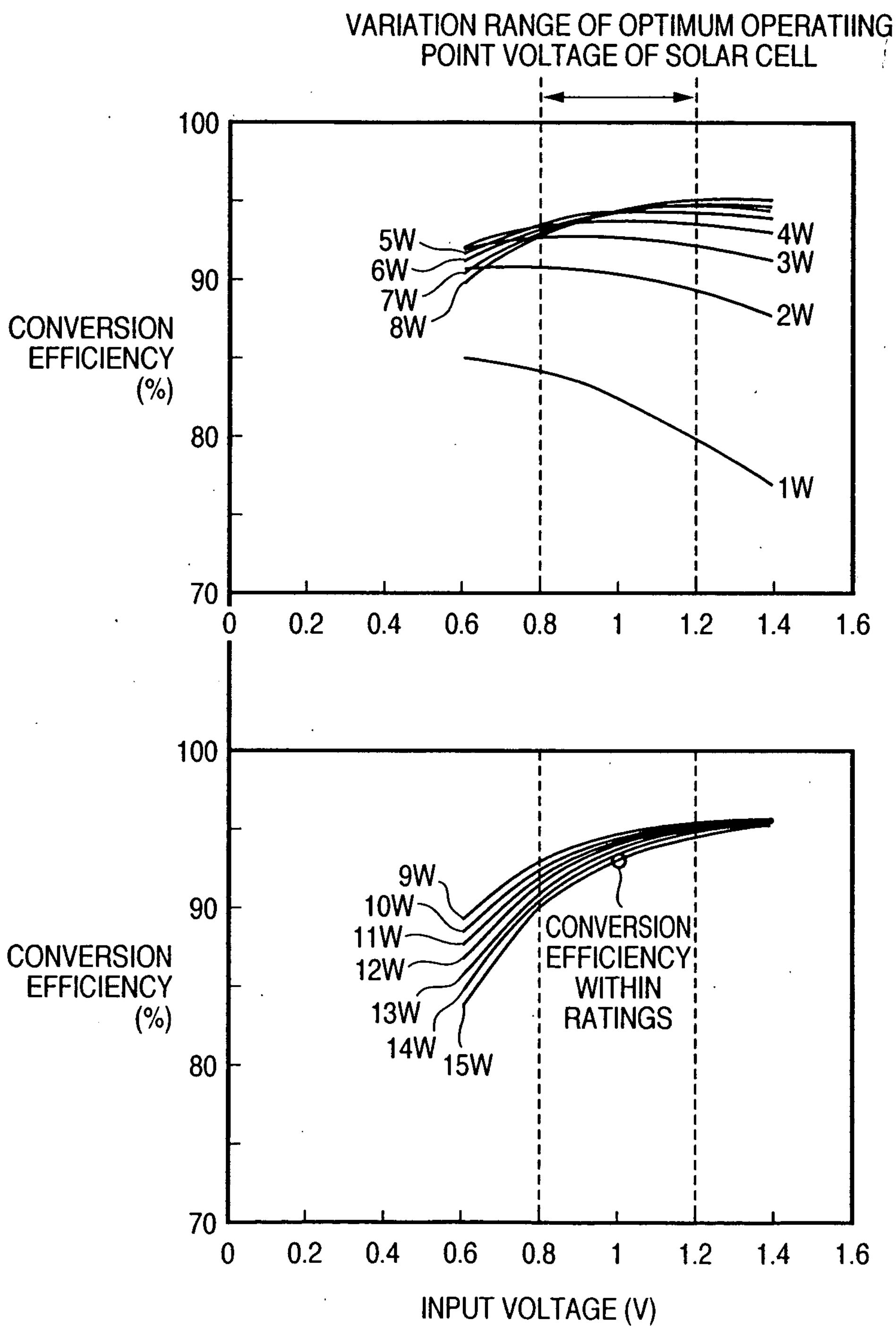
VARIATION RANGE OF OPTIMUM OPERATIING POINT VOLTAGE OF SOLAR CELL
100
90
80
70
CONVERSION EFFICIENCY (%)
5W
6W
7W
8W
4W
3W
2W
1W
0
0.2
0.4
0.6
0.8
1
1.2
1.4
1.6
100
90
80
70
CONVERSION EFFICIENCY (%)
9W
10W
11W
12W
13W
14W
15W
CONVERSION EFFICIENCY WITHIN RATINGS
0
0.2
0.4
0.6
0.8
1
1.2
1.4
1.6
INPUT VOLTAGE (V)

# FIG. 7

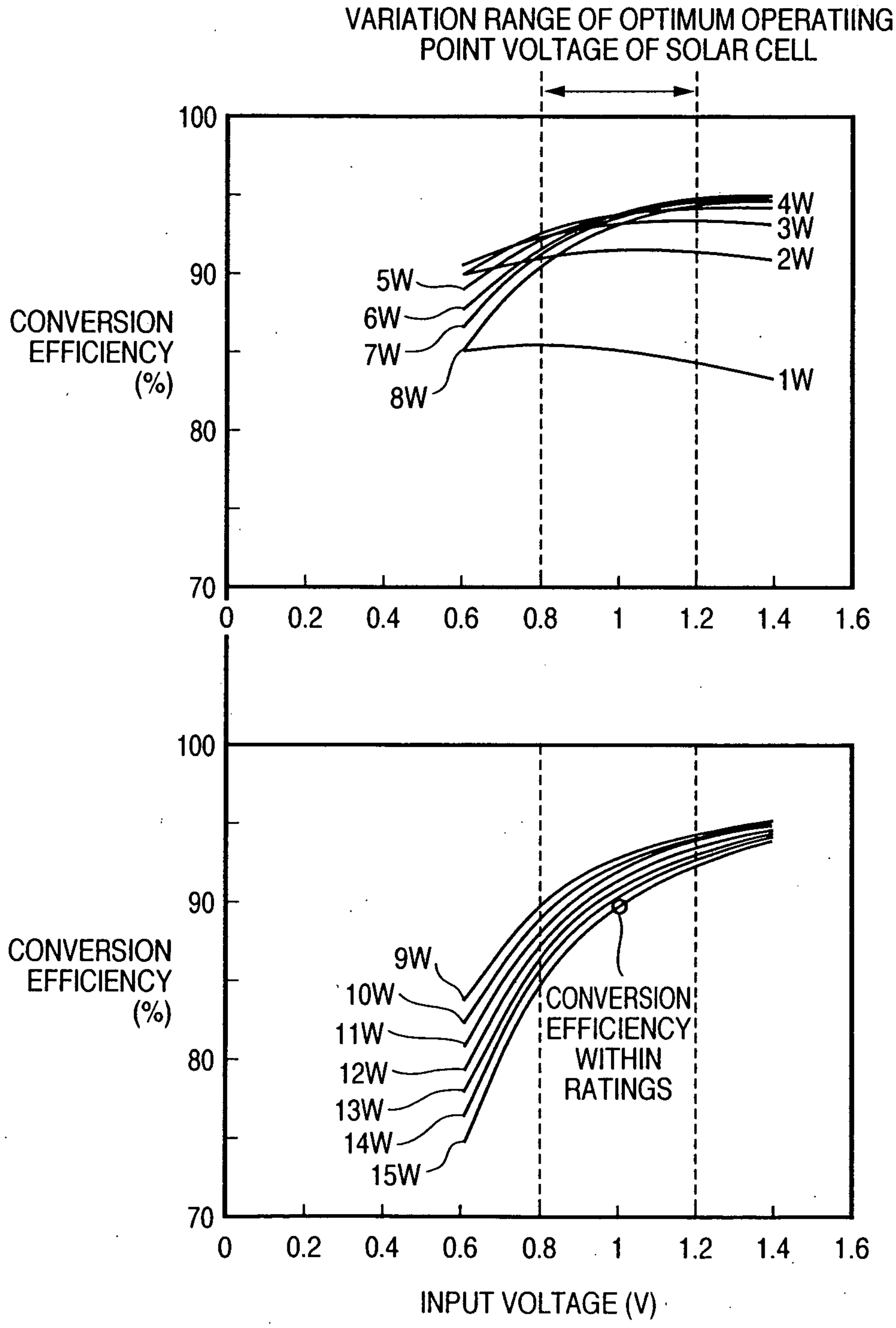
VARIATION RANGE OF OPTIMUM OPERATIING POINT VOLTAGE OF SOLAR CELL
CONVERSION EFFICIENCY (%)
100
90
80
70
0
0.2
0.4
0.6
0.8
1
1.2
1.4
1.6
4W
3W
2W
1W
5W
6W
7W
8W
CONVERSION EFFICIENCY (%)
9W
10W
11W
12W
13W
14W
15W
CONVERSION EFFICIENCY WITHIN RATINGS
INPUT VOLTAGE (V)

# FIG. 8

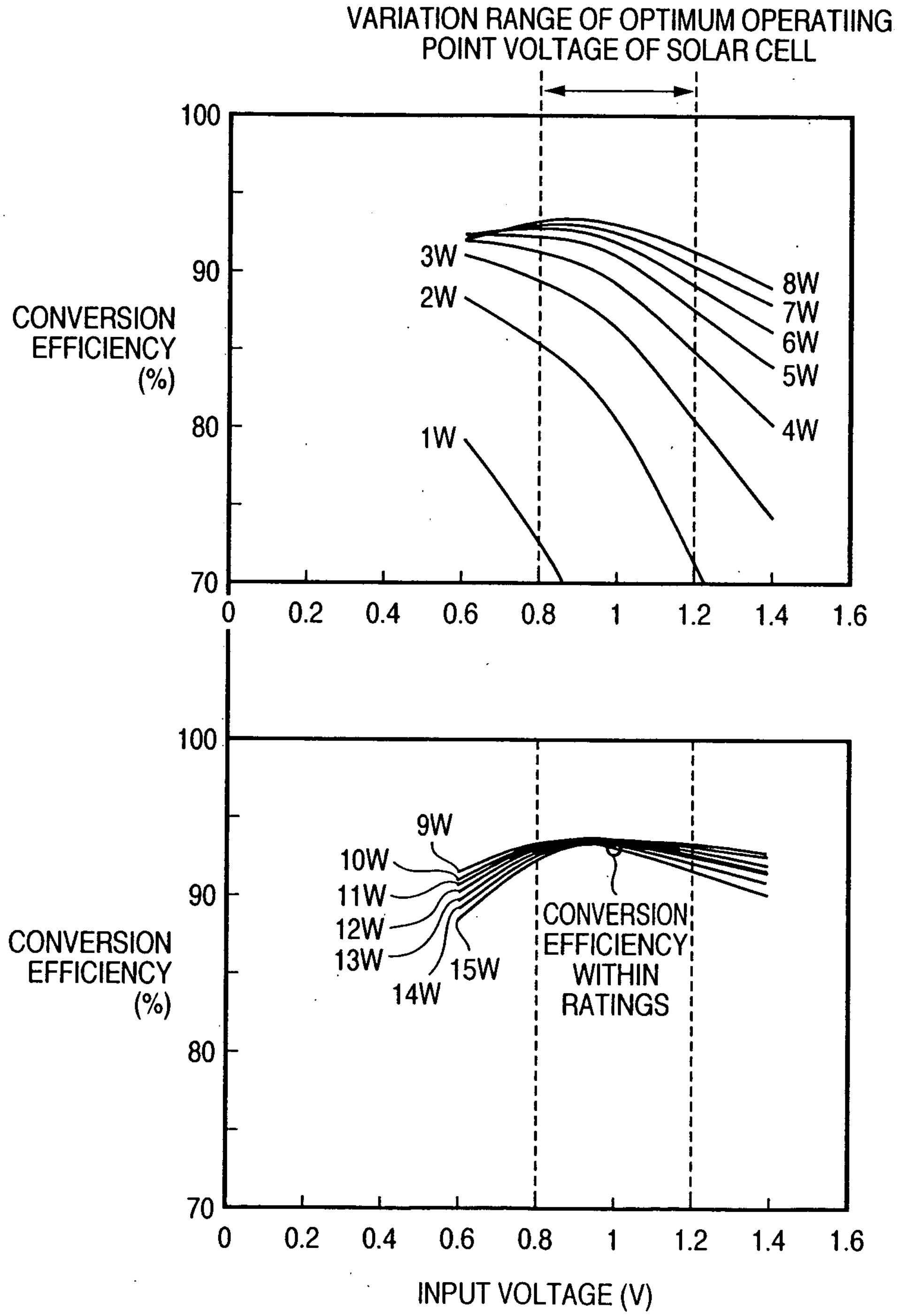
VARIATION RANGE OF OPTIMUM OPERATIING POINT VOLTAGE OF SOLAR CELL
100
90
80
70
CONVERSION EFFICIENCY (%)
3W
2W
1W
8W
7W
6W
5W
4W
0
0.2
0.4
0.6
0.8
1
1.2
1.4
1.6
9W
10W
11W
12W
13W
14W
15W
CONVERSION EFFICIENCY WITHIN RATINGS
INPUT VOLTAGE (V)

FIG. 9

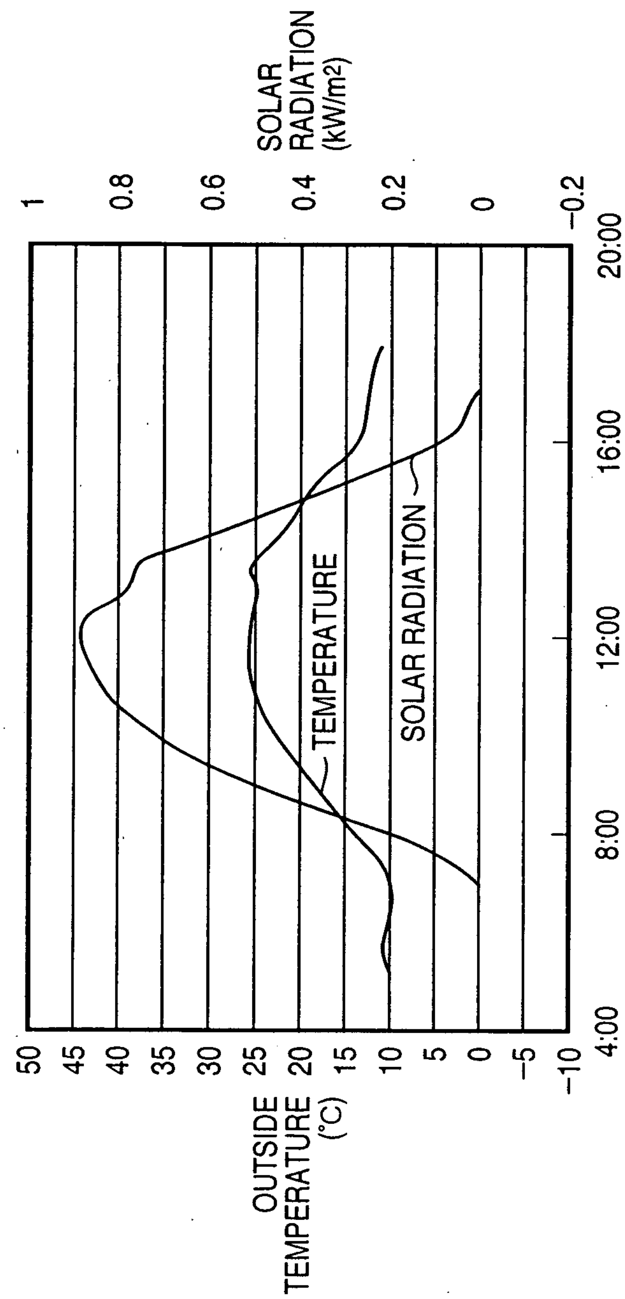
SOLAR
RADIATION
(kW/m²)
1
0.8
0.6
0.4
0.2
0
−0.2
OUTSIDE
TEMPERATURE
(°C)
50
45
40
35
30
25
20
15
10
5
0
−5
−10
4:00
8:00
12:00
16:00
20:00
TEMPERATURE
SOLAR RADIATION

FIG. 10

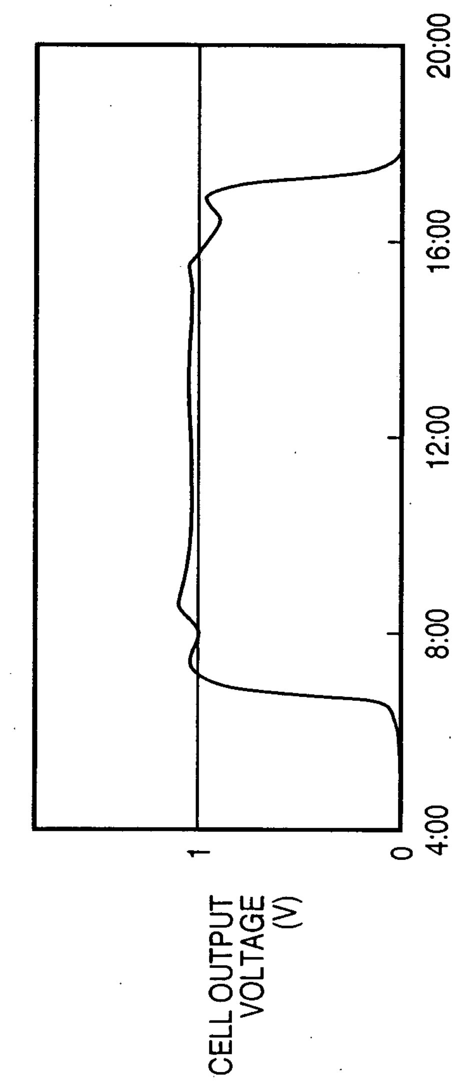

FIG. 11

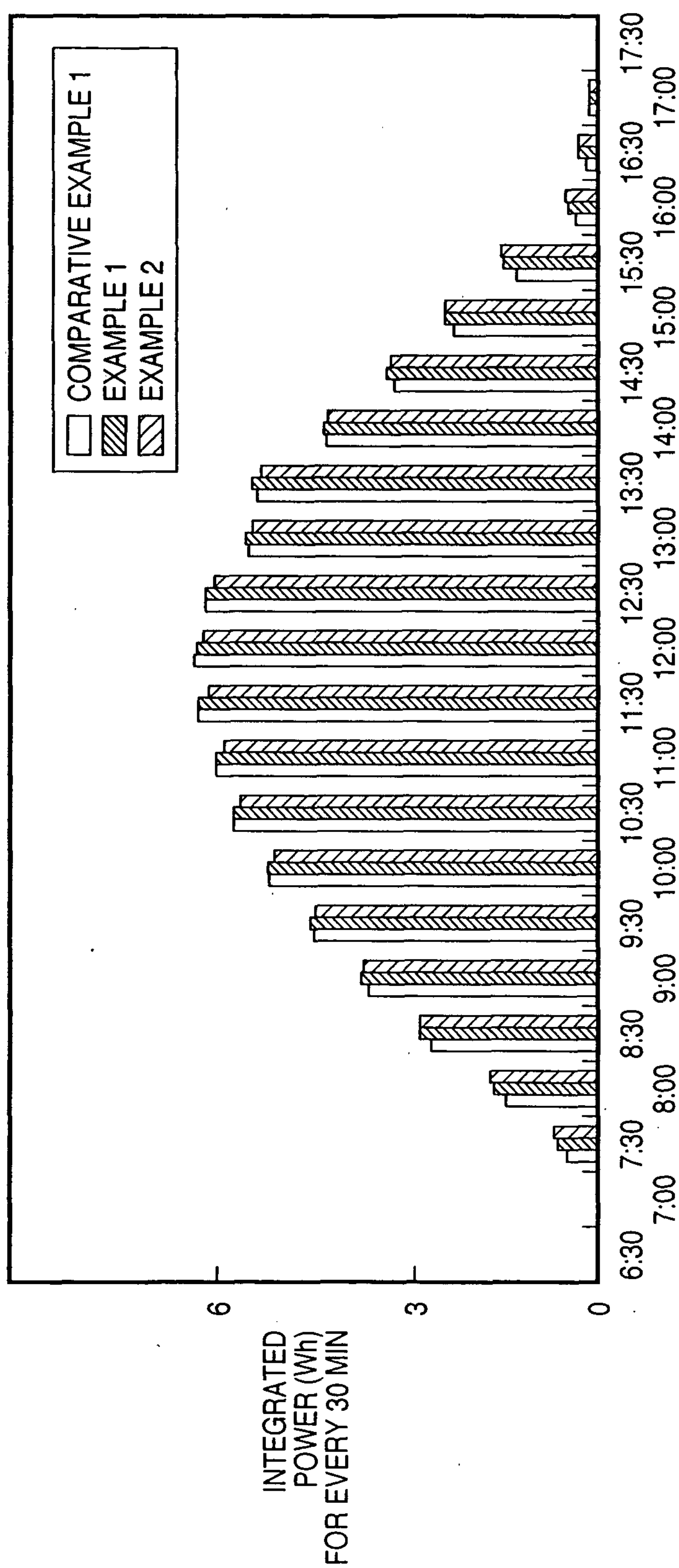
COMPARATIVE EXAMPLE 1
EXAMPLE 1
EXAMPLE 2
INTEGRATED POWER (Wh) FOR EVERY 30 MIN
0
3
6
6:30
7:00
7:30
8:00
8:30
9:00
9:30
10:00
10:30
11:00
11:30
12:00
12:30
13:00
13:30
14:00
14:30
15:00
15:30
16:00
16:30
17:00
17:30

FIG. 12

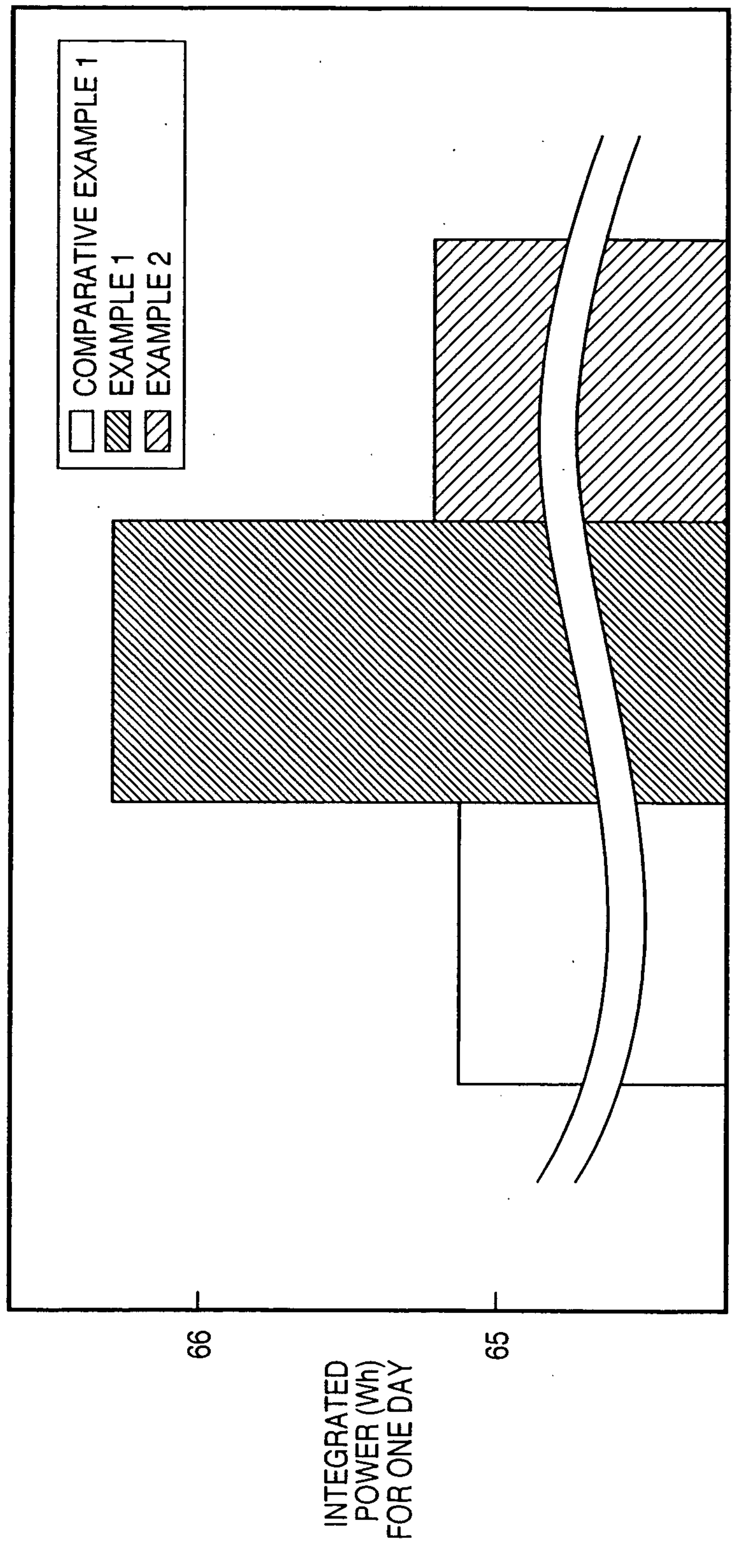
COMPARATIVE EXAMPLE 1
EXAMPLE 1
EXAMPLE 2
66
65
INTEGRATED POWER (Wh) FOR ONE DAY

# F I G. 13

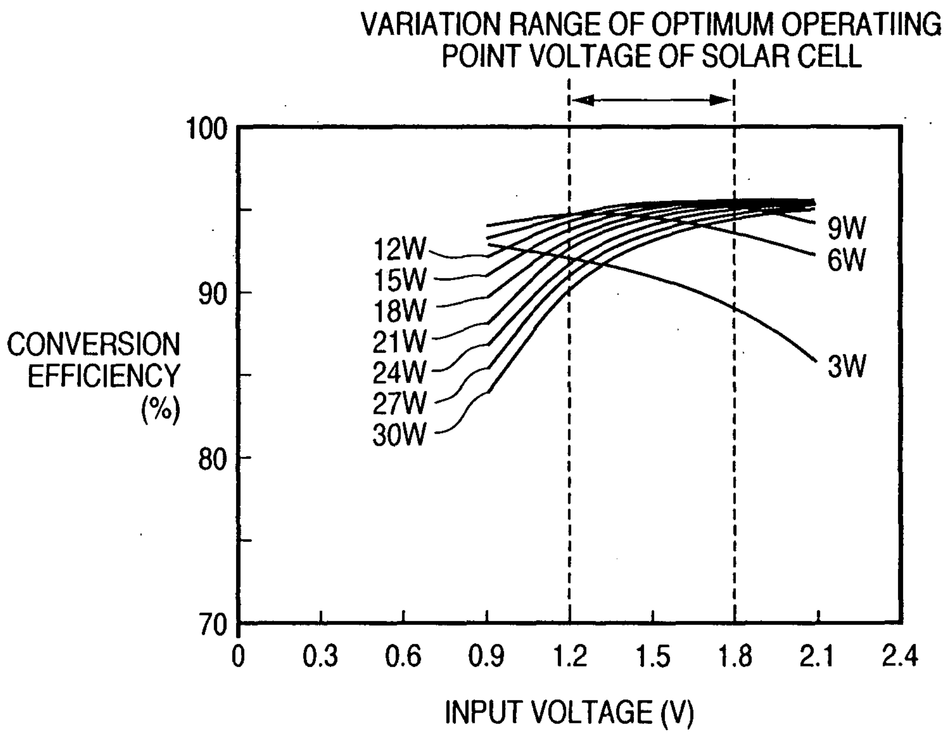
VARIATION RANGE OF OPTIMUM OPERATIING
POINT VOLTAGE OF SOLAR CELL
100
90
80
70
CONVERSION
EFFICIENCY
(%)
12W
15W
18W
21W
24W
27W
30W
9W
6W
3W
0
0.3
0.6
0.9
1.2
1.5
1.8
2.1
2.4
INPUT VOLTAGE (V)

# F I G. 14

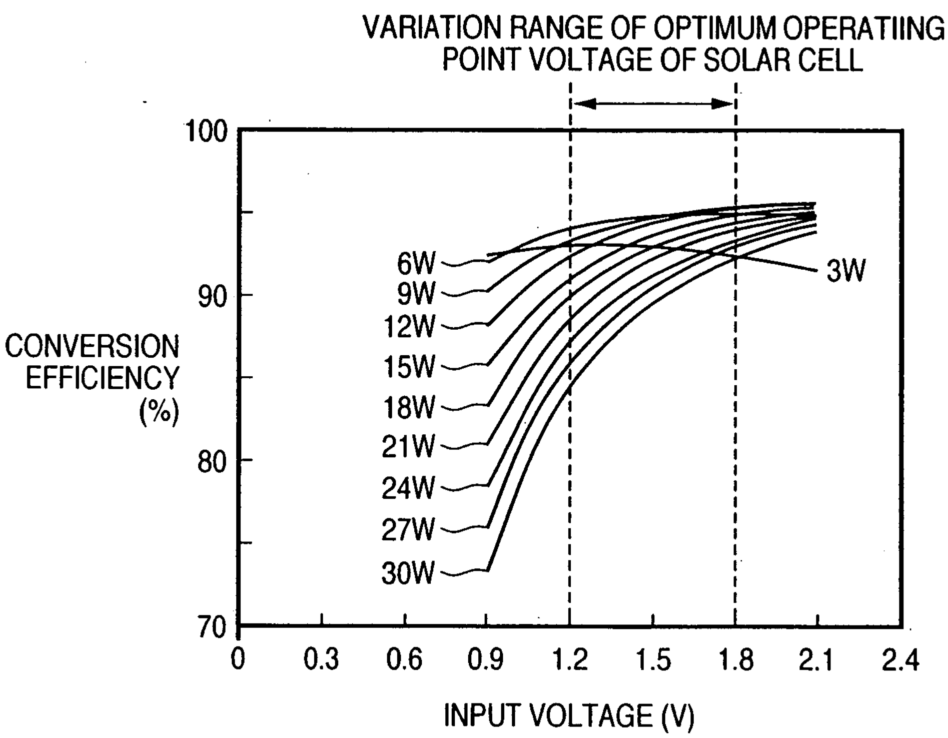
VARIATION RANGE OF OPTIMUM OPERATIING
POINT VOLTAGE OF SOLAR CELL
100
90
80
70
CONVERSION
EFFICIENCY
(%)
6W
9W
12W
15W
18W
21W
24W
27W
30W
3W
0
0.3
0.6
0.9
1.2
1.5
1.8
2.1
2.4
INPUT VOLTAGE (V)

# FIG. 15

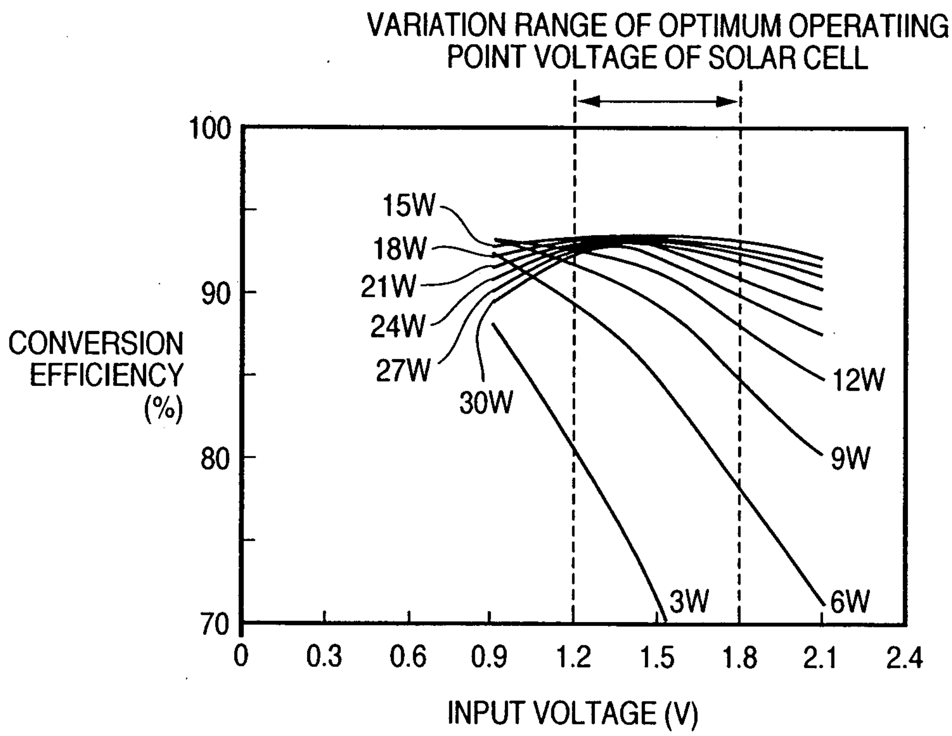
VARIATION RANGE OF OPTIMUM OPERATIING POINT VOLTAGE OF SOLAR CELL
CONVERSION EFFICIENCY (%)
100
90
80
70
0
0.3
0.6
0.9
1.2
1.5
1.8
2.1
2.4
INPUT VOLTAGE (V)
15W
18W
21W
24W
27W
30W
12W
9W
6W
3W

FIG. 16

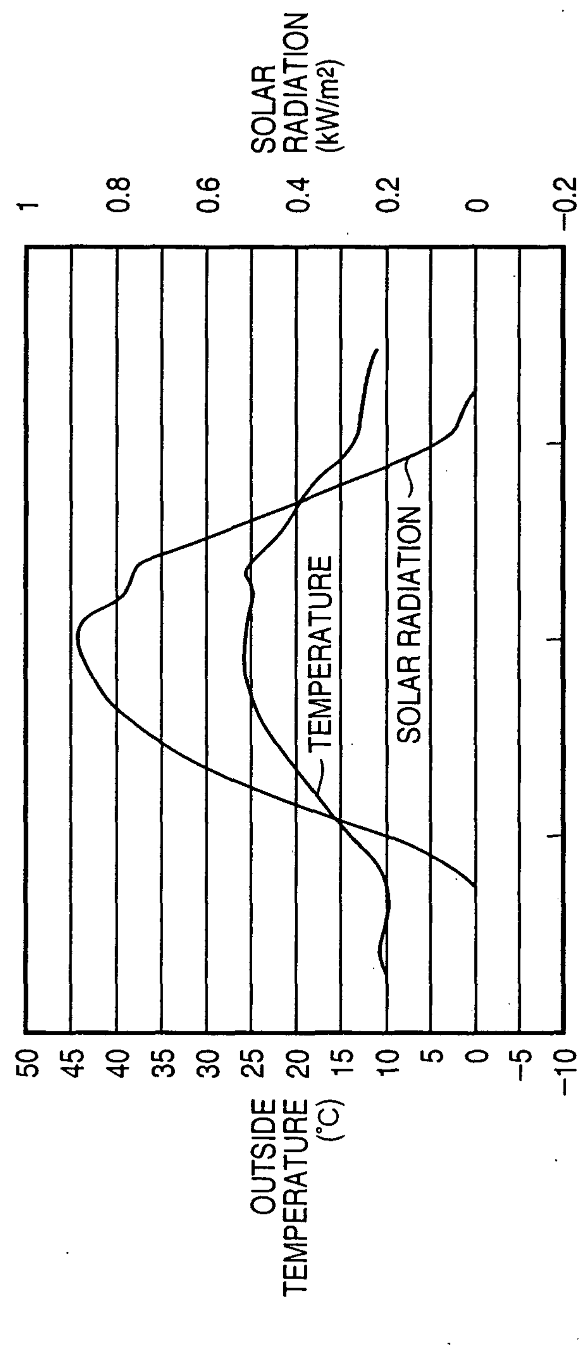
OUTSIDE TEMPERATURE (°C)
50
45
40
35
30
25
20
15
10
5
0
−5
−10
SOLAR RADIATION (kW/m²)
1
0.8
0.6
0.4
0.2
0
−0.2
4:00
8:00
12:00
16:00
20:00
TEMPERATURE
SOLAR RADIATION

FIG. 17

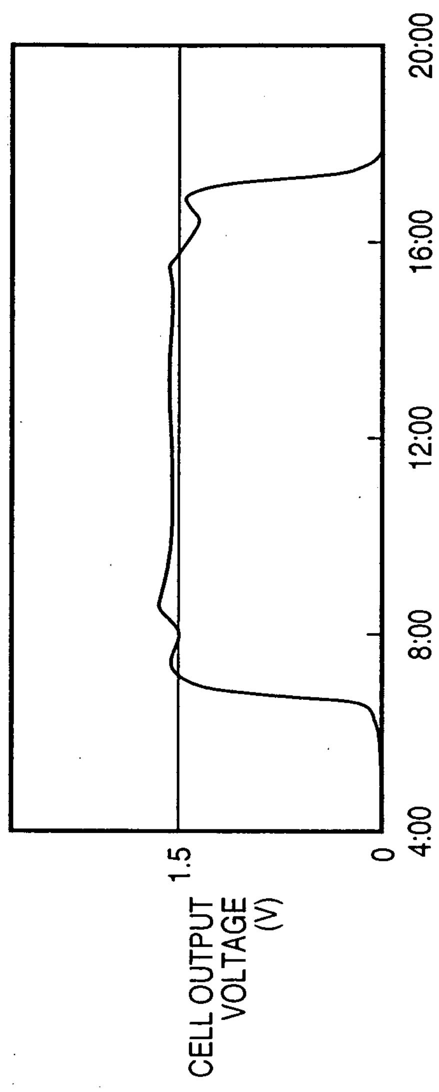

# FIG. 18

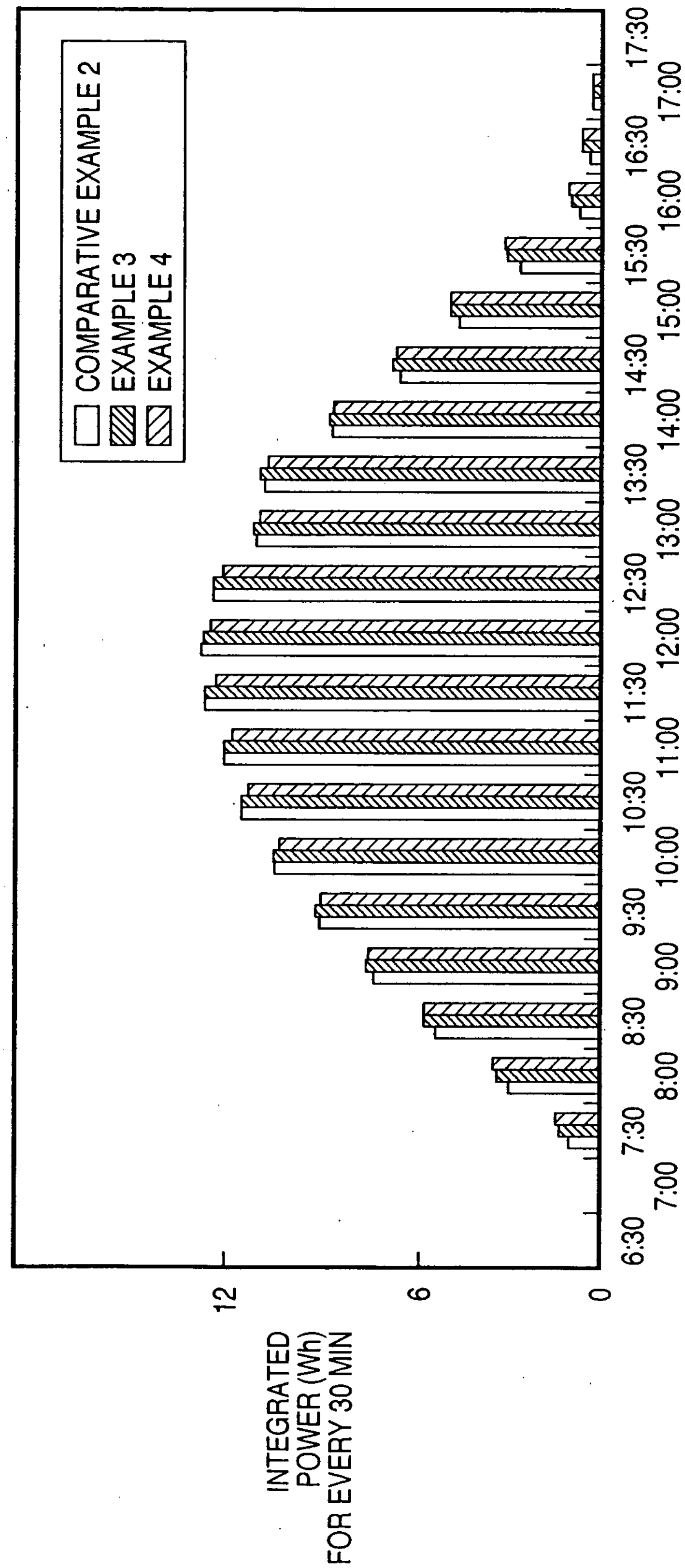
COMPARATIVE EXAMPLE 2
EXAMPLE 3
EXAMPLE 4
INTEGRATED POWER (Wh) FOR EVERY 30 MIN
0
6
12
6:30
7:00
7:30
8:00
8:30
9:00
9:30
10:00
10:30
11:00
11:30
12:00
12:30
13:00
13:30
14:00
14:30
15:00
15:30
16:00
16:30
17:00
17:30

FIG. 19

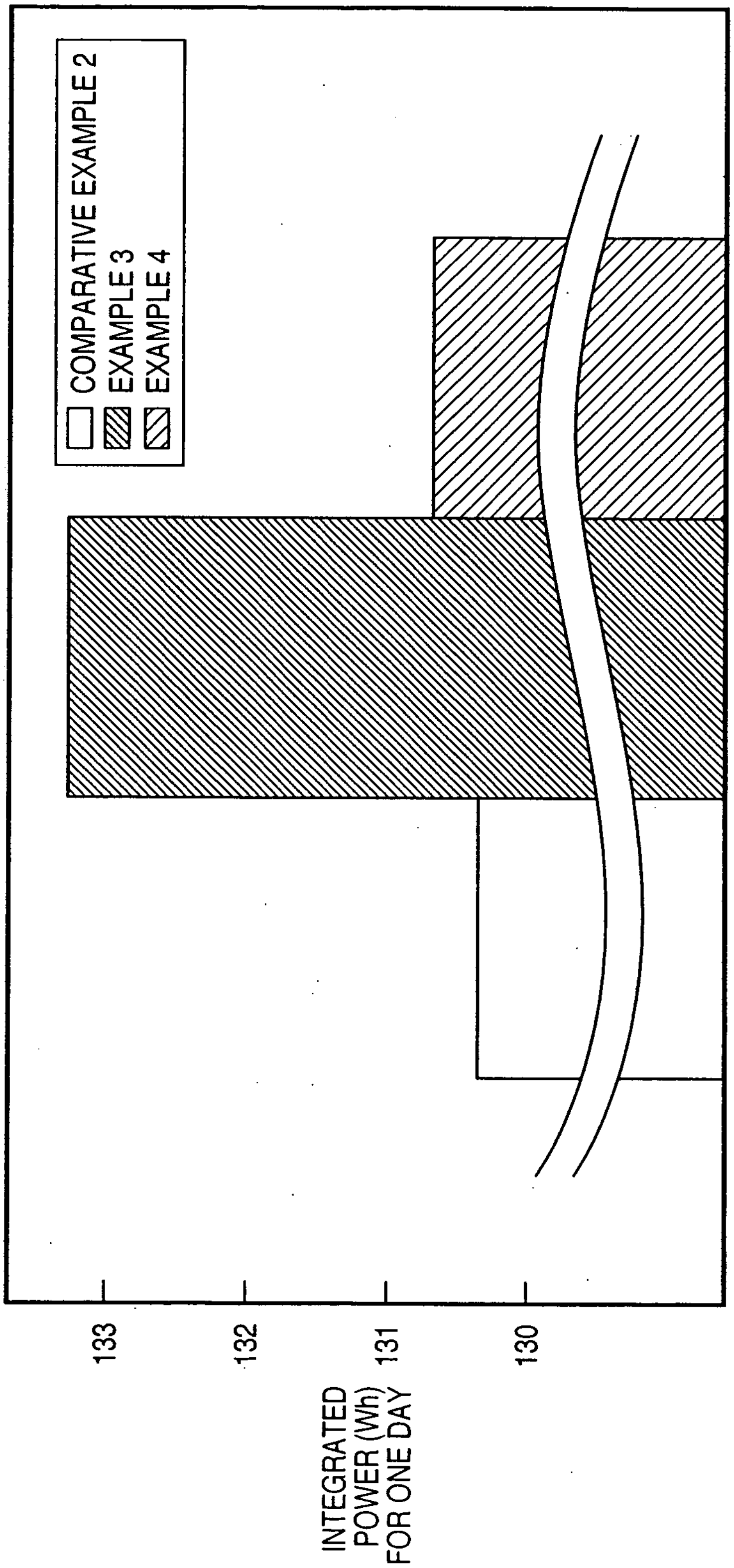
COMPARATIVE EXAMPLE 2
EXAMPLE 3
EXAMPLE 4
INTEGRATED POWER (Wh) FOR ONE DAY
133
132
131
130

# FIG. 20

| CORE |
| --- |
| MATERIAL : FERRITE |
| SHAPE : EP CORE |
| EFFECTIVE SECTIONAL AREA : 33.9$mm^2$ |
| EFFECTIVE MAGNETIC PATH LENGTH : 28.5mm |

| COIL |
| --- |
| PRIMARY WINDING : 2 TURNS × 2 (PUSH-PULL) |
| MATERIAL : FLAT TYPE COPPER WIRE, WINDING RESISTANCE 9.2mΩ |
| SECONDARY WINDING : 400 TURNS |
| MATERIAL : URETHANE-INSULATED MAGNET WIRE, DIAMETER 0.14mm |

# FIG. 21

| CORE |
|---|
| MATERIAL : FERRITE<br>SHAPE : EP CORE<br>EFFECTIVE SECTIONAL AREA : $33.9mm^2$<br>EFFECTIVE MAGNETIC PATH LENGTH : 28.5mm |

| COIL |
|---|
| PRIMARY WINDING : 3 TURNS × 2 (PUSH-PULL)<br>MATERIAL : FLAT TYPE COPPER WIRE, WINDING RESISTANCE 20.7mΩ<br>SECONDARY WINDING : 600 TURNS<br>MATERIAL : URETHANE-INSULATED MAGNET WIRE, DIAMETER 0.115mm |

# FIG. 22

| |
|---|
| CORE |
| MATERIAL : FERRITE<br>SHAPE : EP CORE<br>EFFECTIVE SECTIONAL AREA : 33.9mm2<br>EFFECTIVE MAGNETIC PATH LENGTH : 28.5mm |
| COIL |
| PRIMARY WINDING : 1 TURN × 2 (PUSH-PULL)<br>MATERIAL : FLAT TYPE COPPER WIRE, WINDING RESISTANCE 2.3mΩ<br>SECONDARY WINDING : 200 TURNS<br>MATERIAL : URETHANE-INSULATED MAGNET WIRE, DIAMETER 0.2mm |

# F I G. 23

| CORE |
| --- |
| MATERIAL : FERRITE<br>SHAPE : EP CORE<br>EFFECTIVE SECTIONAL AREA : 33.9mm$^2$<br>EFFECTIVE MAGNETIC PATH LENGTH : 28.5mm |

| COIL |
| --- |
| PRIMARY WINDING : 2 TURNS $\times$ 2 (PUSH-PULL)<br>MATERIAL : FLAT TYPE COPPER WIRE, WINDING RESISTANCE 9.2m$\Omega$<br>SECONDARY WINDING : 266 TURNS<br>MATERIAL : URETHANE-INSULATED MAGNET WIRE, DIAMETER 0.17mm |

# FIG. 24

| CORE |
| --- |
| MATERIAL : FERRITE<br>SHAPE : EP CORE<br>EFFECTIVE SECTIONAL AREA : $33.9mm^2$<br>EFFECTIVE MAGNETIC PATH LENGTH : 28.5mm |
| **COIL** |
| PRIMARY WINDING : 3 TURNS $\times$ 2 (PUSH-PULL)<br>MATERIAL : FLAT TYPE COPPER WIRE, WINDING RESISTANCE 20.7mΩ<br>SECONDARY WINDING : 399 TURNS<br>MATERIAL : URETHANE-INSULATED MAGNET WIRE, DIAMETER 0.14mm |

# FIG. 25

| CORE |
|---|
| MATERIAL : FERRITE<br>SHAPE : EP CORE<br>EFFECTIVE SECTIONAL AREA : $33.9mm^2$<br>EFFECTIVE MAGNETIC PATH LENGTH : 28.5mm |

| COIL |
|---|
| PRIMARY WINDING : 1 TURN $\times$ 2 (PUSH-PULL)<br>MATERIAL : FLAT TYPE COPPER WIRE, WINDING RESISTANCE 2.3mΩ<br>SECONDARY WINDING : 133 TURNS<br>MATERIAL : URETHANE-INSULATED MAGNET WIRE, DIAMETER 0.24mm |

European Patent Office

# EUROPEAN SEARCH REPORT

Application Number
EP 03 01 8031

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>Y | US 6 330 170 B1 (LEE FRED C ET AL)<br>11 December 2001 (2001-12-11)<br>* abstract *<br>* figures 5,12 *<br>* column 4, line 14 - column 5, line 36 *<br>--- | 1-7,9-12<br><br>8 | H02M7/538<br>H02M7/5387<br>H02M7/539<br>H02J3/04 |
| X | PATENT ABSTRACTS OF JAPAN<br>vol. 1997, no. 09,<br>30 September 1997 (1997-09-30)<br>& JP 09 117153 A (SANYO ELECTRIC CO LTD),<br>2 May 1997 (1997-05-02)<br>* abstract *<br>--- | 1-7,9,<br>11,12 | |
| X | HURTADO F J ET AL: "NOVEL HARMONIC REDUCTION AND UNITY POER FACTOR DC/AC CONDITIONING TECHNIQUE FOR RENEWABLE ENERGIES APPLICATIONS"<br>PROCEEDINGS OF STOCKHOLM POWER TECH INTERNATIONAL SYMPOSIUM ON ELECTRIC POWER ENGINEERING, XX, XX,<br>vol. 2, 18 June 1995 (1995-06-18), pages 179-184, XP001033572<br>* figure W *<br>--- | 1-5,7,<br>10-12 | TECHNICAL FIELDS SEARCHED (Int.Cl.7)<br>H02M<br>H02J |
| Y | US 4 149 233 A (FROSCH ROBERT A ADMINISTRATOR ET AL)<br>10 April 1979 (1979-04-10)<br>* abstract *<br>* column 4, line 27 - line 36 *<br>----- | 8 | |

The present search report has been drawn up for all claims

| Place of search | Date of completion of the search | Examiner |
|---|---|---|
| MUNICH | 24 September 2003 | Hurtado-Albir, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 03 01 8031

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2003

| Patent document cited in search report | | Publication date | Patent family member(s) | Publication date |
|---|---|---|---|---|
| US 6330170 | B1 | 11-12-2001 | NONE | |
| JP 09117153 | A | 02-05-1997 | NONE | |
| US 4149233 | A | 10-04-1979 | NONE | |

EPO FORM P0459

For more details about this annex : see Official Journal of the European Patent Office, No. 12/82